# EUROPÄISCHE PATENTSCHRIFT

(11) **EP 3 182 093 B1**
(45) Veröffentlichungstag und Bekanntmachung des Hinweises auf die Patenterteilung: **03.03.2021**
(21) Anmeldenummer: 16201110.0
(22) Anmeldetag: 29.11.2016
(51) Int. Cl.: G01N 11/14, B01F 7/00

(54) **WERKZEUG ZUR RHEOLOGIEMESSUNG**
TOOL FOR RHEOLOGY MEASUREMENT
OUTIL DE MESURE RHÉOLOGIQUE

(30) Priorität: 15.12.2015 DE 102015225277
(43) Veröffentlichungstag der Anmeldung: 21.06.2017
(73) Patentinhaber: KNIELE GmbH, 88422 Bad Buchenau (DE); Universität Stuttgart, 70174 Stuttgart (DE)
(72) Erfinder: KNIELE, Harald, 88422 Bad Buchau (DE); KNIELE, Alexander, 88422 Bad Buchau (DE); BAUMERT, Christian, 73760 Ostfildern (DE); GARRECHT, Harald, 76297 Slurtensee (DE)
(74) Vertreter: Prüfer & Partner mbB Patentanwälte · Rechtsanwälte

(56) Entgegenhaltungen:
- WO-A1-2014/190120
- US-A- 4 878 377
- US-B1- 6 629 451

## Beschreibung

Die vorliegende Erfindung bezieht sich auf ein Werkzeug zur Rheologiemessung.

Besonders in der Betonindustrie ist eine Vorhersage von Eigenschaften von vermischten Medien äußerst wichtig, da die Bandbreite der Anforderungen an Betone in den vergangenen Jahrzehnten stetig gestiegen ist. Daher werden Betone nicht mehr als Drei-Phasen-Werkstoff aus Zement, Wasser und Gesteinskörnungen, sondern als Fünf-Stoff-System gefertigt, wobei zusätzlich zu den drei genannten Phasen Zusatzstoffe und Zusatzmittel zum Einsatz kommen. Die für die unterschiedlichsten Anforderungen zu findende Zusammensetzung des Betons ist hierbei sehr komplex, und allein die Erfahrung von Handwerkern ist hierbei längst nicht mehr ausreichend.

In der Praxis ist es daher wichtig, Mischungen herzustellen, hierbei eine ausreichende Durchmischung der verschiedenen Phasen zu erzielen, und dann die rheologischen Eigenschaften der Mischungen zu bestimmen.

Eine Problematik kann hierbei auftreten, dass sich einzelne Phasen schnell wieder entmischen können. Außerdem kann es bei bestimmten Medien möglich sein, dass Mischungen ihre rheologischen Eigenschaften in Abhängigkeit von der Mischzeit ändern.

Aus US 4,878,377 ist ein Viskosimeter zur Messung von Fluiden im Bereich der Erdölgewinnung offenbart, das einen Rotor mit Mischblättern auf der Außenseite eines Rotors aufweist. Innerhalb des Rotors ist ein Viskositätsmeßwerkzeug angeordnet.

Aus US 6,629,451 B1 ist ein Verfahren zur Rheologiemessung einer gelierten Flüssigkeit bekannt, bei dem der Weissenberg-Effekt vermieden werden kann.

WO 2014/190120 A1 offenbart ein Superpositions-Rheometer, welches ein Fluid mit einem Drehmoment und dazu orthogonaler axialer Oszillationsbelastung beaufschlagt.

Im Stand der Technik sind weiterhin verschiedene Rheometer bekannt, wobei diese beispielsweise ein inneres Werkzeug mit einem Meßkörper mit genau definierten Oberflächen sowie ein äußeres Werkzeug, welches beispielsweise ein hohler Zylinder ist, aufweisen. Dabei ist wichtig, dass für die Messung von rheologischen Eigenschaften ein enger Spalt zwischen dem Meßkörper des inneren Werkzeugs und dem äußeren Werkzeug vorhanden ist, in welchen zu messendes Medium eindringen kann, wenn das innere Werkzeug und das äußere Werkzeug in das zu messende Medium eingetaucht werden.

Da in diesem Zeitraum Entmischung stattfinden kann, und durch die Umfüllung in ein anderes Gefäß zudem Änderungen der rheologischen Eigenschaften des Mischgutes auftreten können, können solche Vorgehensweisen keine zuverlässigen Aussagen über rheologische Eigenschaften von homogenen Mischungen liefern. Durch das Vorscheren der Probe und den eigentlichen Messvorgang im Rheometer sind weitere Entmischungen unvermeidlich. Soll die Probe wiederholt vermessen werden, muss die Probe zuvor durch geeignete Maßnahmen wieder homogenisiert werden.

Es ist daher die Aufgabe der vorliegenden Erfindung, Werkzeuge für die Rheologiemessung zur Verfügung zu stellen, bei deren Verwendung der Entmischung entgegengewirkt werden kann und die rheologischen Eigenschaften von homogenen Gemischen erfasst werden können.

Diese Aufgabe wird durch ein Werkzeug mit den Merkmalen gemäß Anspruch 1 sowie einem System gemäß Anspruch 5 gelöst. Weitere vorteilhafte Ausgestaltungen der Erfindung sind Gegenstand der abhängigen Ansprüche.

Die Erfindung beinhaltet ein äußeres Werkzeug für die Rheologiemessung, welches vorzugsweise im Wesentlichen als hohler Zylinder ausgestaltet ist. Dabei ist der Innendurchmesser so groß, dass ein Meßkörper eines inneren Werkzeugs zur Rheologiemessung einen kleineren Außendurchmesser als der hohle Zylinder besitzt. Dabei besitzt das äußere Werkzeug zur Rheologiemessung auf der äußeren Umfangsfläche angebrachte ein im Wesentlichen schneckenförmig ausgebildetes Element, welches zum Mischen eines Mediums geeignet ist. Weiterhin weist das äußere Werkzeug zur Rheologiemessung Aussparungen in seiner Mantelfäche auf, so dass das Medium, in welches das Werkzeug eingetaucht wird, sowohl an der inneren Umfangsfläche als auch der äußeren Umfangsfläche des äußeren Werkzeugs zur Rheologiemessung entlangströmen kann. Daher kann gut durchmischtes, homogenes Medium in den Spalt zwischen innerem Werkzeug zur Rheologiemessung und äußerem Werkzeug zur Rheologiemessung strömen.

Das schneckenförmige Bauteil erstreckt sich im Wesentlichen über den kompletten radialen Umfang des zylinderförmigen Bauteils und umkreise den gesamten Außenradius des zylinderförmigen Bauteils mindestens ein Mal. Das schneckenförmige Bauteil erstreckt sich bis zu einem Bereich der äußeren Mantelfläche des zylinderförmigen Bauteils, in welchem die Aussparungen vorgesehen sind.Das äußere Werkzeug wird vorzugsweise von einem eigenen Antrieb rotiert und kann daher unabhängig vom inneren-Werkzeug, welches hauptsächlich der Rheologiemessung dient, bewegt werden.

Im Folgenden wird ein bevorzugtes Ausführungsbeispiel unter Bezugnahme auf die beigefügten Zeichnungen näher erläutert.
Fig. 1 zeigt eine Vorderansicht des äußeren Werkzeugs zur Rheologiemessung.
Fig. 2 zeigt eine Querschnittansicht eines Systems zur Rheologiemessung, aufweisend im Wesentlichen die Anordnung eines äußeren Werkzeugs zur Rheologiemessung und eines inneren Werkzeugs zur Rheologiemessung.

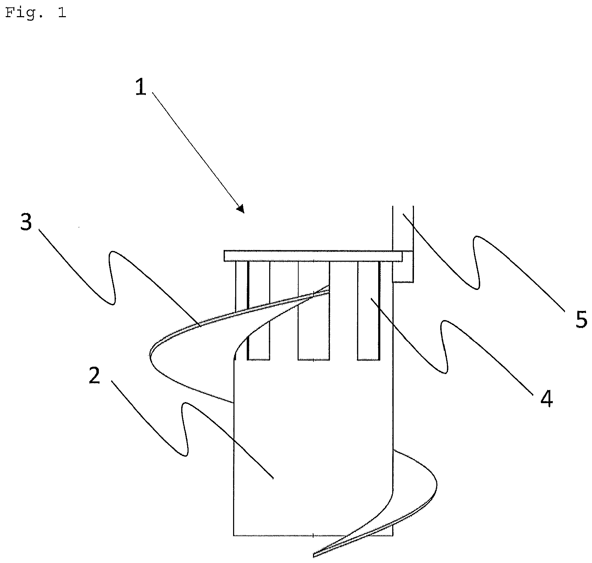

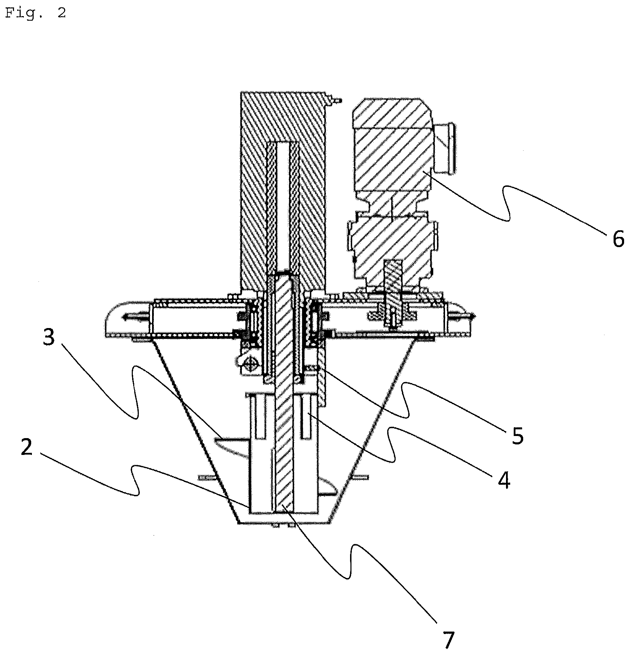

Wie in Fig. 1 gezeigt, weist das Werkzeug zur Rheologiemessung 1 ein zylinderförmiges Bauteil 2 auf, welches innen im Wesentlichen hohl ist. Am zylinderförmigen Bauteil 2 ist an dessen äußerer Mantelfläche eine Mischvorrichtung 2 angebracht, welche in dieser Ausführungsform als schneckenförmiges Element ausgestaltet ist. Dieses schneckenförmige Element umkreist den gesamten Außenradius des zylinderförmigen Bauteils 2 mindestens ein Mal. Das schneckenförmige Element endet vertikal in einem Bereich, in welchem im zylinderförmigen Bauteil 2 Aussparungen 4 vorgesehen sind. Diese Aussparungen 4 haben im Wesentlichen eine rechteckige Form und sind hinsichtlich ihrer Höhe und ihrer Breite gleich. Die Aussparungen 4 sind in gleichmäßigen Intervallen auf der äußeren Umfangsfläche des zylinderförmigen Bauteils 2 angeordnet. Ferner ist am zylinderförmigen Bauteils 2 ein Befestigungselement 5 angebracht, um das Werkzeug zur Rheologiemessung 1 mit einem Antrieb 6 (in Fig. 2 gezeigt) zu verbinden.

Fig. 2 zeigt die Anordnung des äußeren Werkzeugs zur Rheologiemessung 1 und eines inneren Werkzeugs zur Rheoloegiemessung 8. Hierbei wird deutlich, dass das innere Werkzeug zur Rheologiemessung 7 einen maximalen Außendurchmesser besitzt, welcher kleiner ist als der Innendurchmesser des zylinderförmigen Bauteils 2 des äußeren Werkzeugs zur Rheologiemessung 1, so dass das innere Werkzeug zur Rheologiemessung 7 im Inneren des zylinderförmigen Bauteils 2 des äußeren Werkzeugs zur Rheologiemessung 1 angeordnet werden kann, wobei sich ein gleichmäßiger radialer Spalt ausbildet.

Vor einer Rheologiemessung, welche mit einem inneren Werkzeug zur Rheologiemessung 7 (aufweisend einen Meßkörper) durchgeführt wird, kann nun das äußere Werkzeug zur Rheologiemessung 1 rotiert werden. Dabei bewirkt insbesondere das Mischelement 3, dass das Medium, von dem die rheologischen Eigenschaften bestimmt werden sollen, kurz vor der Rheologiemessung nochmals gut durchmischt wird. Insbesondere die Schneckenform des Mischelements 3 bewirkt dabei eine axiale Strömung entlang der inneren und äußeren Mantelfläche des zylinderförmigen Bauteils 2. Durch die Aussparungen 4 im oberen Bereich des zylinderförmigen Bauteils 2 kann sich daher ein ununterbrochenes axiales Strömungsprofil einstellen. Daher wird insbesondere das Medium, welches sich im hohlen Innenraum des zylinderförmigen Bauteils 2 befindet, stets gut durchmischt, da es durch das Strömungsprofil stets in Bewegung ist und ein Austausch von Medium mit dem Bereich außerhalb des zylinderförmigen Bauteils 2 möglich ist.

Die vorliegende Erfindung ist nicht auf oben genannte Ausführungsform beschränkt. Es wäre beispielsweise auch möglich, die Aussparungen 4 dreiecksförmig, quadratisch, trapezförmig, kreisförmig oder oval auszugestalten. Auch eine andere - hinsichtlich der Produktion aufwändigere - Form ist möglich.

Bei der Messung der rheologischen Eigenschaften des Mediums im Anschluss an den Durchmischungsvorgang wird das äußere Werkzeug zur Rheologiemessung 1 vorzugsweise nicht bewegt, sondern es wird nur der Meßkörper eines inneren Werkzeugs zur Rheologiemessung 7 innerhalb des zylinderförmigen Bauteils 2 rotiert.

Die vorliegende Erfindung bezieht sich auf ein Werkzeug 1, welches eine Rheologiemessung unterstuützt. Das Werkzeug 1 weist ein im Wesentlichen innen hohles zylinderförmiges Element 2 auf, in dessen Hohlraum ein inneres Werkzeugs zur Rheologiemessung 7 angeordnet werden kann. Das Werkzeug 1 weist Mischelemente 2 sowie Aussparungen in der Mantelfläche des zylinderförmigen Bauteils 2 auf und ist durch einen Antrieb 6 bewegbar bzw. rotierbar. Somit kann das zu vermessende Medium vor der Rheologiemessung durchmischt werden, so dass die Eigenschaften einer homogenen Mischung bestimmt werden können.

## Patentansprüche

1. Werkzeug (1) zur Unterstützung der Messung von rheologischen Eigenschaften eines Mediums, aufweisend
ein zylinderförmiges Bauteil (2), das innen im Wesentlichen hohl ist,
ein Mischelement (3), welches an einer äußeren Umfangsfläche des zylinderförmigen Bauteils (2) angebracht ist, ein Befestigungselement (5) zur Befestigung des Werkzeugs (1)
an einer Antriebseinheit (6),
wobei das Mischelement (3) im Wesentlichen schneckenförmig ausgebildet ist und um die Umfangsfläche des zylinderförmigen Bauteils (2) verläuft, wobei sich das schneckenförmige Bauteil (3) im Wesentlichen über den kompletten radialen Umfang des zylinderförmigen Bauteils (2) erstreckt und den gesamten Außenradius des zylinderförmigen Bauteils (2) mindestens ein Mal umkreist,
**dadurch gekennzeichnet,**
**dass** das zylindrische Bauteil (2) Aussparungen (4) in seiner Mantelfläche aufweist
und **dass** sich das schneckenförmige Bauteil (3) bis zu einem Bereich der äußeren Mantelfläche des zylinderförmigen Bauteils (2) erstreckt, in welchem die Aussparungen (4) vorgesehen sind.

2. Werkzeug (1) gemäß einem der vorhergehenden Ansprüche, wobei die Aussparungen (4) eine im Wesentlichen rechteckige Form aufweisen.

3. Werkzeug (1) gemäß einem der vorhergehenden Ansprüche, wobei die Höhen und Breiten der Aussparungen (4) im Wesentlichen gleich sind.

4. Werkzeug (1) gemäß einem der vorhergehenden Ansprüche, wobei die Aussparungen (4) im Wesentlichen dieselben radialen Abstände voneinander aufweisen.

5. System aus Werkzeug (1) gemäß einem der vorhergehenden Ansprüche und einem inneren Werkzeug zur Rheologiemessung (7), das im Inneren des zylinderförmigen Bauteils (2) des äußeren Werkzeugs zur Rheologiemessung (1) angeordnet ist, wobei das innere Werkzeug zur Rheologiemessung (7) einen maximalen Außendurchmesser besitzt, welcher kleiner ist als der Innendurchmesser des zylinderförmigen Bauteils (2) des Werkzeuges (1).

6. System gemäß Anspruch 5, wobei das Werkzeug (1) mit einem eigenen Antrieb (6) ausgestattet ist.

## Claims

1. Tool (1) for assisting the measurement of rheological properties of a medium, comprising
a cylindrical component (2) which is substantially hollow on the inside,
a mixing element (3) attached to an outer peripheral surface of the cylindrical member (2),
a fastening element (5) for fastening the tool (1) to a drive unit (6),
wherein the mixing element (3) is substantially helical and extends around the circumferential surface of the cylindrical component (2), wherein the helical component (3) extends substantially over the complete radial circumference of the cylindrical component (2) and circles the entire outer radius of the cylindrical component (2) at least once,
**characterised in that** the cylindrical component (2) has recesses (4) in its circumferential surface, and the helical component (3) extends up to a region of the outer circumferential surface of the cylindrical component (2) in which the recesses (4) are provided.

2. Tool (1) according to any of the preceding claims, wherein the recesses (4) have a substantially rectangular shape.

3. Tool (1) according to any of the preceding claims, wherein the heights and widths of the recesses (4) are substantially equal.

4. Tool (1) according to any of the preceding claims, wherein the recesses (4) have substantially the same radial distances from each other.

5. System of a tool (1) according to any one of the preceding claims and an inner rheology measuring tool (7) arranged inside the cylindrical member (2) of the outer rheology measuring tool (1), the inner rheology measuring tool (7) having a maximum outer diameter which is smaller than the inner diameter of the cylindrical member (2) of the tool (1).

6. System according to claim 5, wherein the tool (1) is equipped with its own drive (6).

## Revendications

1. Outil (1) d'aide à la mesure de propriétés rhéologiques d'un milieu, présentant
un composant (2) de forme cylindrique, qui est sensiblement creux à l'intérieur,
un élément mélangeur (3), lequel est installé sur une surface périphérique extérieure du composant (2) de forme cylindrique,
un élément de fixation (5) pour fixer l'outil (1) sur une unité d'entraînement (6),
dans lequel
l'élément mélangeur (3) est réalisé sensiblement en forme de vis sans fin et s'étend autour de la surface périphérique du composant (2) de forme cylindrique, dans lequel le composant (3) en forme de vis sans fin s'étend sensiblement sur la périphérie radiale totale du composant (2) de forme cylindrique et encercle au moins une fois la totalité du rayon extérieur du composant (2) de forme cylindrique,
**caractérisé en ce**
**que** le composant (2) cylindrique présente des évidements (4) dans sa surface enveloppante,
et **que** le composant (3) en forme de vis sans fin s'étend jusqu'à une zone de la surface enveloppante extérieure du composant (2) de forme cylindrique, dans lequel sont prévus les évidements (4).

2. Outil (1) selon l'une quelconque des revendications précédentes, dans lequel les évidements (4) présentent une forme sensiblement rectangulaire.

3. Outil (1) selon l'une quelconque des revendications précédentes, dans lequel les hauteurs et largeurs des évidements (4) sont sensiblement identiques.

4. Outil (1) selon l'une quelconque des revendications précédentes, dans lequel les évidements (4) présentent sensiblement les mêmes espacements radiaux les uns des autres.

5. Système composé d'un outil (1) selon l'une quelconque des revendications précédentes et d'un outil intérieur de mesure rhéologique (7), qui est disposé à l'intérieur du composant (2) de forme cylindrique de l'outil extérieur de mesure rhéologique (1), dans lequel l'outil intérieur de mesure rhéologique (7) possède un diamètre extérieur maximal, lequel est plus petit que le diamètre intérieur du composant (2) de forme cylindrique de l'outil (1).

6. Système selon la revendication 5, dans lequel l'outil (1) est équipé d'un entraînement (6) propre.
